# EUROPEAN PATENT APPLICATION

(11) **EP 1 653 455 A2**
(43) Date of publication of application: **03.05.2006**
(21) Application number: 05109101.5
(22) Date of filing: 30.09.2005
(51) Int. Cl.: G11B 7/007, G11B 7/24

(54) **Information recording medium, information playback method, and information recording method**

(30) Priority: 29.10.2004 JP 2004316472
(71) Applicant: KABUSHIKI KAISHA TOSHIBA, Tokyo 105-8001 (JP)
(72) Inventor: Yamakawa, Hideyuki Toshiba Corporation I.P.D., 105-8001, Tokyo (JP); Otake, Koichi Toshiba Corporation I.P.D., 105-8001, Tokyo (JP); Tatsuzawa, Yukiyasu Toshiba Corporation I.P.D., 105-8001, Tokyo (JP); Moro, Hiroyuki Toshiba Corporation I.P.D., 105-8001, Tokyo (JP); Yoshida, Nobuhisa Toshiba Corporation I.P.D., 105-8001, Tokyo (JP); Kaneshige, Toshihiko Toshiba Corporation I.P.D., 105-8001, Tokyo (JP)
(74) Representative: Henkel, Feiler & Hänzel

(57) **Abstract**

According to this invention, an information recording medium has the first and second sides (D11, D12). The information recording medium includes the first information recording layer (D12) which includes the first reflecting layer (D13) reflecting incident light with a predetermined intensity from the first side, the second information recording layer (D22) which includes a second reflecting layer (D23) reflecting incident light with a predetermined intensity from the second side, an adhesion layer (D30) which adheres the first information recording layer and the second information recording layer, and a unique information recording area (BCA) which is formed by burst-cutting the first reflecting layer and the second reflecting layer in correspondence with medium unique information, using incident light with an intensity higher than the predetermined intensity from one of the first side and the second side.

## Description

The present invention relates to an information recording medium having a BCA (Burst Cutting Area). The present invention also relates to an information playback method for playing back information from an information recording medium having a BCA (Burst Cutting Area). The present invention also relates to an information recording method for recording information on an information recording medium having a BCA (Burst Cutting Area).

An optical disc such as a DVD has a region called a BCA. A basic technique pertaining to the BCA has been proposed. More specifically, in the BCA, information is recorded in a stripe formed by removing a metal reflecting film by a predetermined width (see reference 1: National Technical Report Vol. 43, No. 3, JUN 1997; "Individual Information Recording Technique on DVD-ROM Disc", pp. 70-77).

Additionally, a technique which prevents, using the BCA, a user from illegally copying and using pirate copies of the optical disc has been disclosed (reference 2: Jpn. Pat. Appln. KOKAI Publication No. 10-233019).

Furthermore, a technique pertaining to a BCA structure and manufacturing method corresponding to a double-sided disc read-accessible from both first and second sides has been disclosed (reference 3: Jpn. Pat. Appln. KOKAI Publication No. 2004-87124).

In references 1 and 2, a technique pertaining to a BCA processing method corresponding to the double-sided recordable disc is not disclosed. In reference 3, the technique pertaining to the BCA processing method corresponding to the double-sided disc read-accessible from both first and second sides is disclosed, but the BCA disclosed in reference 3 is incompatible with a conventional BCA standard.

It is an object of the present invention to provide an information recording medium having a BCA read-accessible from both first and second sides while being compatible with an existing BCA standard. It is another object of the present invention to provide an information playback method capable of playing back information recorded in the BCA, from the first and second sides of the information recording medium having the BCA read-accessible from both the first and second sides while being compatible with the existing BCA standard. It is still another object of the present invention is to provide an information recording method capable of playing back information recorded in the BCA, from the first and second sides of the information recording medium having the BCA read-accessible from both the first and second sides while being compatible with the existing BCA standard, and appropriately recording the information.

According to an aspect of the present invention, there is provided an information recording medium which has a first side and a second side, comprising a first information recording layer which includes a first reflecting layer reflecting incident light with a predetermined intensity from the first side, a second information recording layer which includes a second reflecting layer reflecting incident light with a predetermined intensity from the second side, an adhesion layer which adheres the first information recording layer and the second information recording layer, and a unique information recording area which is formed by burst-cutting the first reflecting layer and the second reflecting layer in correspondence with medium unique information, using incident light with an intensity higher than the predetermined intensity from one of the first side and the second side.

According to another aspect of the present invention, there is provided an information recording medium which has a first side and a second side, comprising a first information recording layer which includes a first reflecting layer reflecting incident light with a predetermined intensity from the first side, and a first unique information recording area formed by burst-cutting the first reflecting layer in correspondence with medium unique information using incident light with an intensity higher than the predetermined intensity from the first side, a second information recording layer which includes a second reflecting layer reflecting incident light with a predetermined intensity from the second side, and a second unique information recording area formed by burst-cutting the second reflecting layer in correspondence with medium unique information using incident light with an intensity higher than the predetermined intensity from the second side, and an adhesion layer which adheres the first information recording layer and the second information recording layer.

According to still another aspect of the present invention, there is provided an information playback method for playing back an information recording medium, the information recording medium having a first information recording layer which includes a first reflecting layer reflecting incident light with a predetermined intensity from the first side, a second information recording layer which includes a second reflecting layer reflecting incident light with a predetermined intensity from the second side, an adhesion layer which adheres the first information recording layer and the second information recording layer, and a unique information recording area which is formed by burst-cutting the first reflecting layer and the second reflecting layer in correspondence with medium unique information, using incident light with an intensity higher than the predetermined intensity from one of the first side and the second side, and the unique information recording area having a first information area in which first information is recorded, a second information area in which second information is recorded, and a third information area which is an area sandwiched between the first information area and the second information area, and in which first information is recorded, the information playback method comprising applying a light beam with the predetermined intensity, and detecting reflected light of the light beam, and playing back the medium unique information succeeding to the first information in a first playback process upon detection of the first information reflected in the detected reflected light, and playing back the medium unique information succeeding to the second information in a second playback process upon detection of the second information reflected in the detected reflected light.

According to still another aspect of the present invention, there is provided an information recording method for recording information on an information recording medium, the information recording medium having a first information recording layer which includes a first reflecting layer reflecting incident light with a predetermined intensity from the first side, a second information recording layer which includes a second reflecting layer reflecting incident light with a predetermined intensity from the second side, an adhesion layer which adheres the first information recording layer and the second information recording layer, and a unique information recording area which is formed by burst-cutting the first reflecting layer and the second reflecting layer in correspondence with medium unique information, using incident light with an intensity higher than the predetermined intensity from one of the first side and the second side, and the unique information recording area having a first information area in which first information is recorded, a second information area in which second information is recorded, and a third information area which is an area sandwiched between the first information area and the second information area, and in which first information is recorded, the information recording method comprising applying a light beam with the predetermined intensity, and detecting reflected light of the light beam, playing back the medium unique information succeeding to the first information in a first playback process upon detection of the first information reflected in the detected reflected light, and playing back the medium unique information succeeding to the second information in a second playback process upon detection of the second information reflected in the detected reflected light, and with reference to the playback medium unique information, applying the light beam reflecting predetermined information, and recording the predetermined information on the first information recording layer and the second information recording layer.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a BCA playback circuit which plays back data recorded in a BCA;
FIG. 2 is a block diagram showing an example of an information recording/playback apparatus to which the BCA playback circuit is applied;
FIG. 3 is a view showing an outline of the first side (A-side) of a double-sided/single-layered optical disc D according to an embodiment of the present invention;
FIG. 4 is a view showing an outline of the second side (B-side) of the double-sided/single-layered optical disc D according to the embodiment of the present invention;
FIG. 5 is a sectional view showing an example of the state of a disc (reflecting layer) before a barcode stripe process is performed for the BCA;
FIG. 6 is a sectional view showing an example of the state of the disc (reflecting layer) after the barcode stripe process is performed for the BCA;
FIG. 7 is a view showing an example of the relationship between high-level (IBH) and low-level (IBL) playback signals obtained from the BCA;
FIG. 8 is a timing chart showing an example of the relationship between the playback signal and recorded data obtained when the BCA is played back from the first side (A-side);
FIG. 9 is a timing chart showing an example of the relationship between the playback signal and recorded data obtained when the BCA is played back from the second side (B-side);
FIG. 10 is a view showing an example of a data sequence in the BCA when viewed from the first side (A-side);
FIG. 11 is a view showing an example of a data sequence in the BCA when viewed from the second side (B-side);
FIG. 12 is a flowchart for explaining an example of a playback process of the optical disc;
FIG. 13 is a flowchart for explaining an example of a recording process of the optical disc;
FIG. 14 is a view showing an example of the section of the disc before two media are laminated and the BCA stripe process is performed;
FIG. 15 is a view showing an example of the section of the disc before the two media are laminated and after the BCA stripe process is performed;
FIG. 16 is a view showing an example of the section of the disc after two media are laminated; and
FIG. 17 is a view showing an example of the manufacturing sequence of the optical disc.

An embodiment of the present invention will be described below with reference to the accompanying drawing.

In this embodiment, a double-sided/single-layered disc (information recording medium) which can record information from first and second sides and has one recording layer for each side will be exemplified. However, the present invention is not limited to the double-sided/single-layered disc. The present invention can be applied to another type of disc such as a single-sided/single-layered, single-sided/double-layered, or double-sided/double-layered disc.

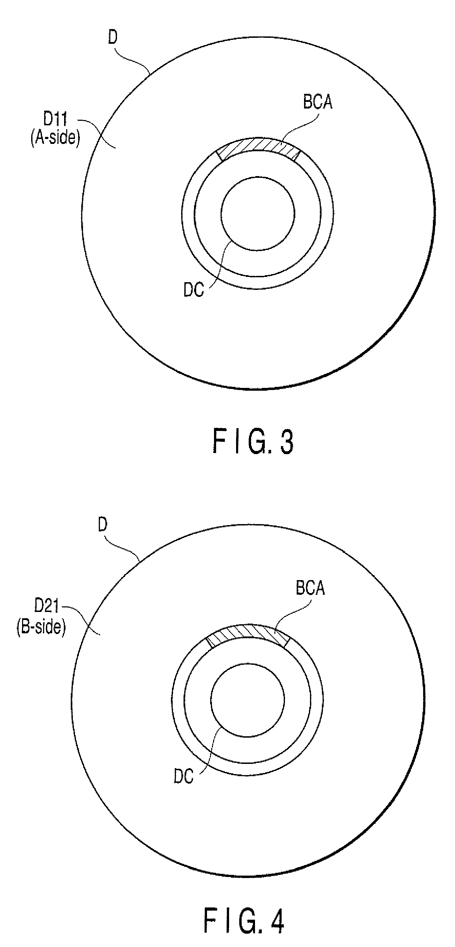

FIG. 3 is a view showing an outline of a first side (A-side) D11 of a double-sided/single-layered optical disc D according to the embodiment of the present invention. FIG. 4 is a view showing an outline of a second side (B-side) D21 of the double-sided/single-layered optical disc D according to the embodiment of the present invention. The "A-side" and "B-side" are names used for convenience. For example, when an arbitrary side is designated as the A-side, the opposite side is provisionally designated as the B-side. Barcode stripes formed in the BCAs shown in FIGS. 3 and 4 are the reverse of each other. That is, FIG. 3 shows the BCA stripe when viewed from the A-side, and FIG. 4 shows that when viewed from the B-side. The ring-like BCA is formed around a center hole DC of the optical disc D. For example, information unique to the disc is recorded on this BCA. In this case, the BCA serves as a unique information recording area.

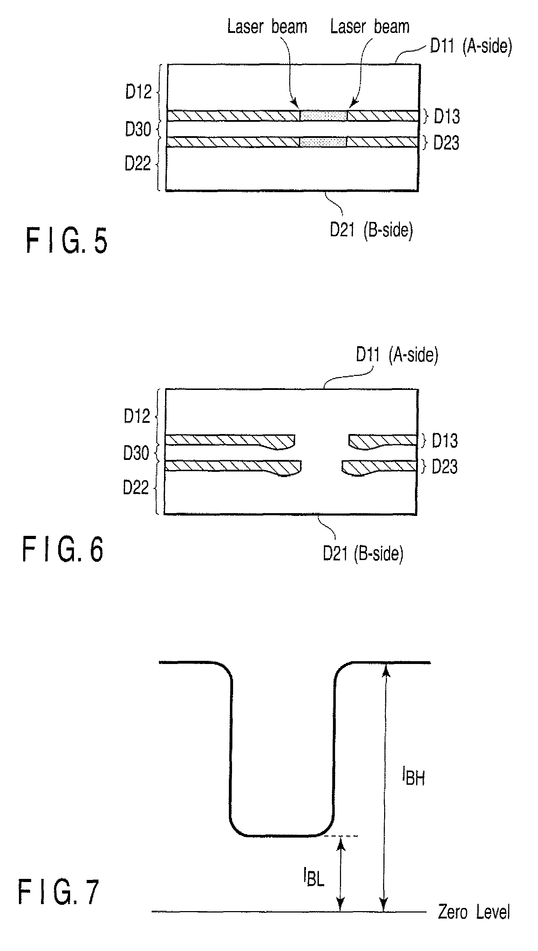

FIG. 5 is a sectional view showing the state of the disc (reflecting layer) before a barcode stripe process is performed for the BCA. FIG. 6 is a sectional view showing the state of the disc (reflecting layer) after the barcode stripe process is performed for the BCA.

As shown in FIGS. 5 and 6, the optical disc D has the first and second sides D11 and D21, first and second information recording layers D12 and D22, and an adhesion layer D30 which adheres the first and second information recording layers. The first information recording layer D12 has a first reflecting layer D13 which reflects an incident light beam having a predetermined intensity from the first side D11. Similarly, the second information recording layer D12 has a second reflecting layer D23 which reflects an incident light beam having a predetermined intensity from the second side D21.

As shown in FIG. 5, before the stripe process is performed, the first reflecting layer D13 on the first side (A-side) D11 in the BCA completely remains, and the second reflecting layer D23 on the second side (B-side) D21 in the BCA also completely remains. In the state shown in FIG. 5, for example, when a laser beam with high intensity is applied from the first side (A-side) D11, both the first and second reflecting layers D13 and D23 corresponding to an irradiated portion are removed (burst-cut) as shown in FIG. 6. That is, when laser power is made sufficiently high (sufficiently higher than the laser power of a playback light beam (to be described later)), the first and second reflecting layers D13 and D23 can be simultaneously removed. This barcode stripe formed on the BCA corresponds to a present BCA standard. Additionally, this barcode stripe is also read-accessible from the first side (A-side) D11 or the second side (B-side) D21.

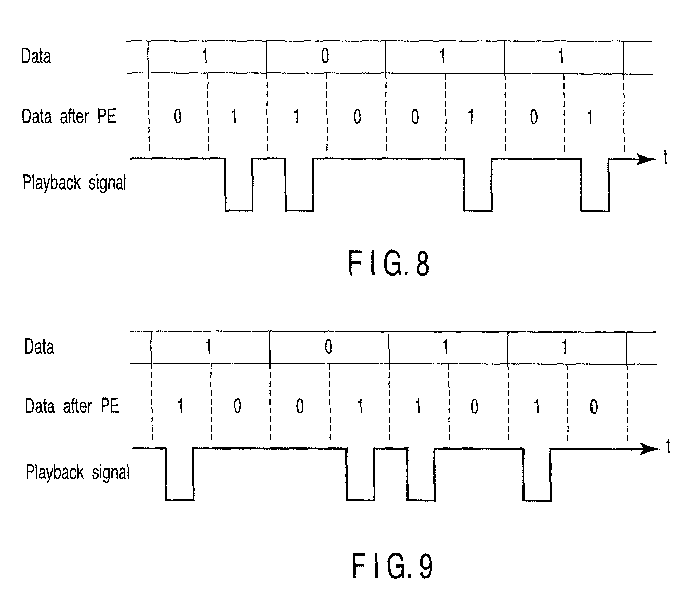

A playback signal from the above BCA will be described below. FIG. 7 is a view showing the relationship between high- and low-level playback signals obtained from the BCA. As shown in FIG. 7, the level at which light in the BCA is not reflected is defined as IBL, and the level in the BCA at which light is reflected is defined as IBH. That is, the reflection level of the burst-cut region in the BCA is defined as IBL, and that of the remaining region in the BCA is defined as IBH. In this case, when the BCA is played back from the first side (A-side) D11, the optical disc is designed to satisfy the condition IBL/IBH ≦ 0.8. Similarly, when the BCA is played back from the second side (B-side) D21, the optical disc is also designed to satisfy the condition IBL/IBH ≦ 0.8. That is, the adhesion layer D30 having a light transmissivity to satisfy the above condition is employed. With reference to FIGS. 8 and 9, the modulation rule of data recorded in the BCA barcode stripe will be described below. FIG. 8 is a timing chart showing the relationship between the playback signal and recorded data obtained when the BCA is played back from the first side (A-side). FIG. 9 is a timing chart showing the relationship between the playback signal and recorded data obtained when the BCA is played back from the second side (B-side).

The data recorded in the BCA barcode stripe is modulated by PE (Phase Encoding), and RZ-recorded. That is, as shown in FIG. 8, "1" of the recorded data is modulated into "01" after PE, and "0" of the recorded data is modulated into "10" after PE. These modulated data are then RZ-recorded.

The rotational direction of the disc when playing back the first side (A-side) D11 is the same as that when playing back the second side (B-side) D21. Hence, a playback data sequence obtained when playing back the BCA from the first side (A-side) D11 is opposite to that obtained when playing back the BCA from the second side (B-side) D21. That is, as shown in FIG. 9, "10" after PE corresponds to "1" of the recorded data, and "01" after PE corresponds to "0" of the recorded data.

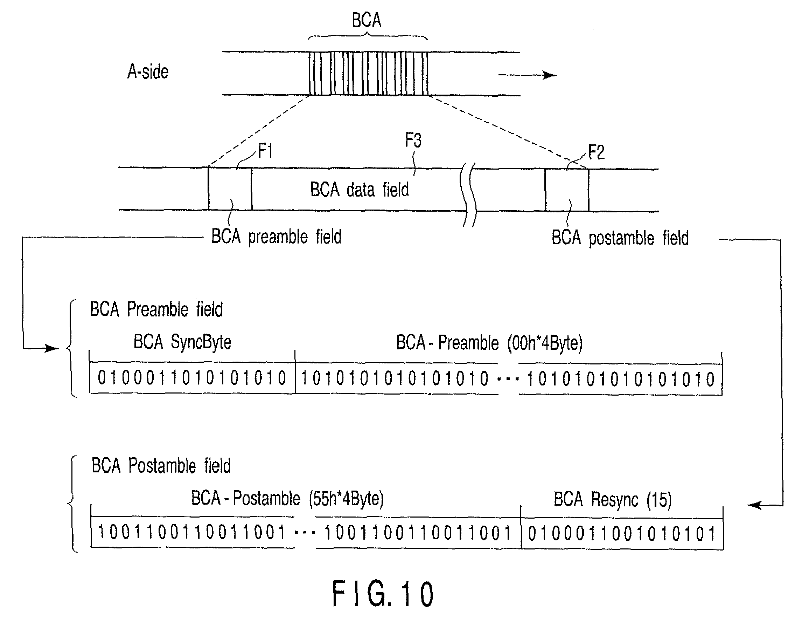

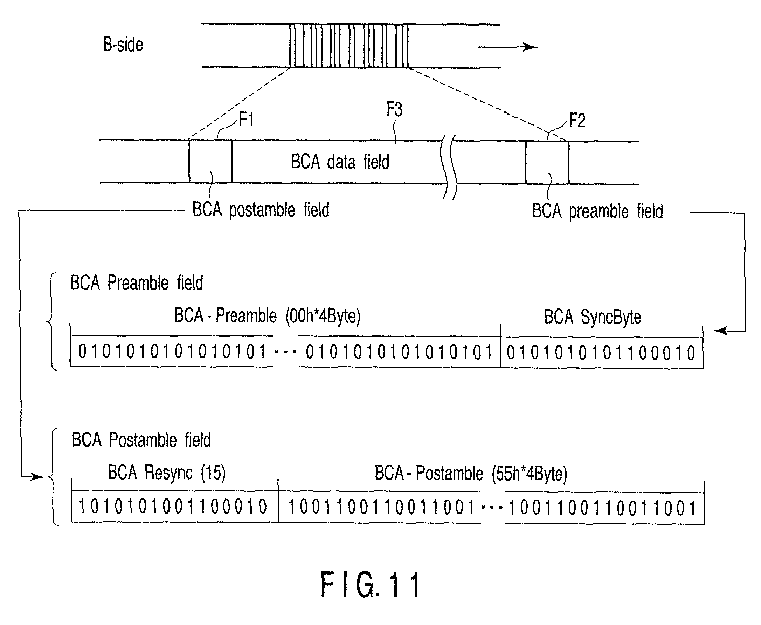

With reference to FIGS. 10 and 11, a data format in the BCA will be described below. FIG. 10 is a view showing a data sequence in the BCA when viewed from the first side (A-side) D11. The data sequence in the BCA when viewed from the first side (A-side) D11 is the same as a data format in the BCA standard. That is, as shown in FIG. 10, the BCA includes a "BCA Preamble field (F1)" (first information area), "BCA DATA field (F3)" (third information area), and "BCA Postamble field (F2)" (second information area). That is, the "BCA DATA field" is sandwiched between the "BCA Preamble field" and "BCA Postamble field". A predetermined specific pattern is recorded in each of the "BCA Preamble field" and "BCA Postamble field" of these fields. More specifically, a "BCA Resync" is present as a specific pattern at the start of the "BCA Postamble field", and a "BCA Sync" is present as a specific pattern at the end of the "BCA Preamble field".

The information recording/playback apparatus (to be described below) detects data recorded in the "BCA Preamble field" and "BCA Postamble field". Hence, the information recording/playback apparatus can detect the start and end positions of the "BCA DATA field", and obtain byte synchronization of the playback data. Note that, for example, disc unique information is recorded in the "BCA DATA field".

Alternatively, FIG. 11 is a view showing a data sequence in the BCA when viewed from the second side (B-side). When the data recorded in the BCA is read from the second side (B-side) D21, the data is read from the end to start of the BCA data. Accordingly, as shown in FIG. 11, the data is read in the order of the "BCA Postamble field (F1)", "BCA DATA field (F3)", and "BCA Preamble field (F2)". That is, the specific patterns in the "BCA Preamble field" and "BCA Postamble field" are also read in the order opposite to that shown in FIG. 10. However, the "BCA Resync" as the specific pattern is present at the start of the "BCA Postamble field", and the "BCA Sync" serving as the specific pattern is present at the end of the "BCA Preamble field". Therefore, even when the information recording/playback apparatus (to be described below) reads the data in the order opposite to that shown in FIG. 10, the specific patterns can be detected. Accordingly, as in the case of playback from the first side (A-side) D11, the start and end positions of the "BCA DATA field" can be detected, and the byte synchronization of the playback data can be obtained.

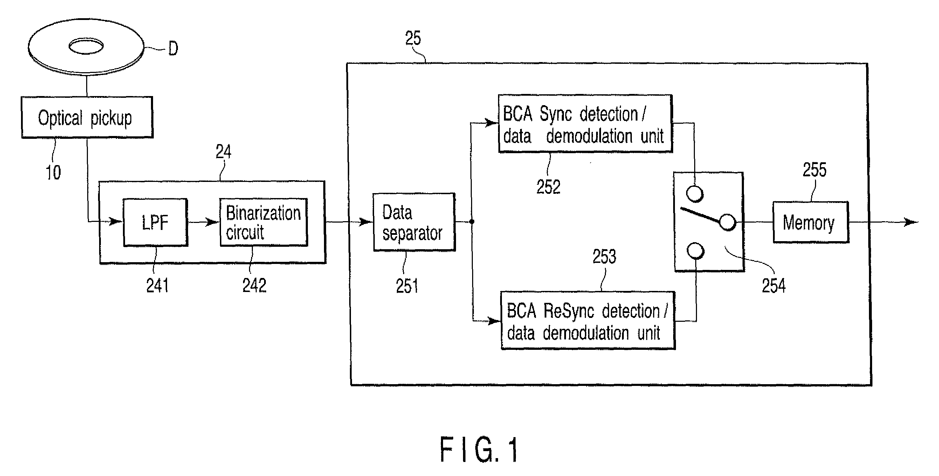

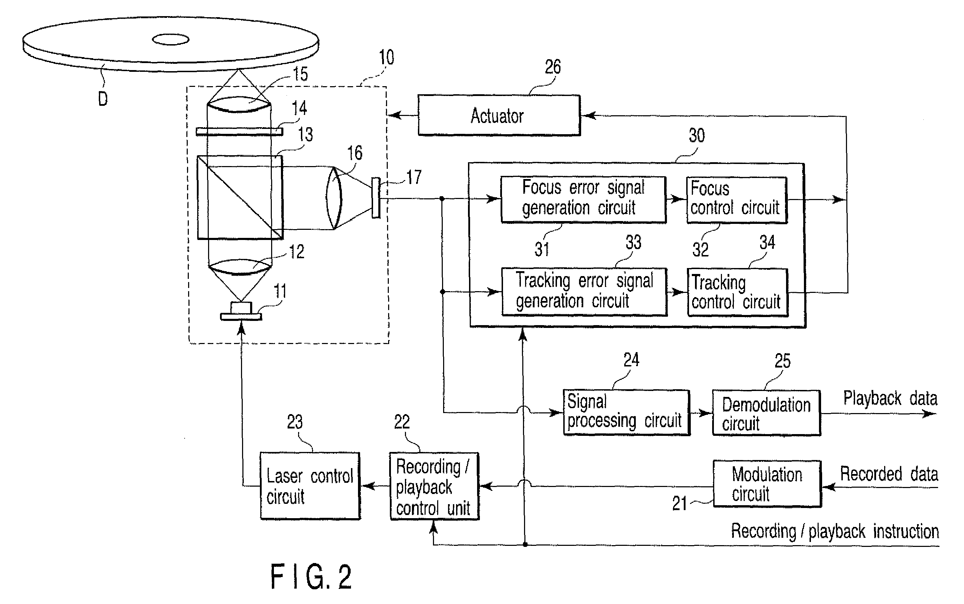

A BCA playback circuit which plays back the data recorded in the BCA will be described below. FIG. 1 is a block diagram showing an example of a BCA playback circuit which plays back the data recorded in the BCA. FIG. 2 is a block diagram showing an example of an information recording/playback apparatus to which the BCA playback circuit is applied.

An optical pickup 10 reads the data recorded on an optical disc D. The data recorded in the BCA barcode stripe is also read by the optical pickup 10. The optical pickup 10 outputs an electrical signal corresponding to the BCA barcode stripe. A low-pass filter (LPF) 241 removes the high-frequency component of this electrical signal. As the low-pass filter (LPF) 241, for example, a secondary Bessel filter having a cut-off frequency of 550 Hz is used. A binarization circuit 242 converts the playback signal without the high-frequency component into "H" or "L" level signal. This binarization process can be implemented by comparing a predetermined threshold value with the playback signal level.

A data separator 251 outputs the binarized signal as binary data in synchronism with a reference clock. The output data corresponds to the PE-modulated data shown in FIGS. 8 and 9. A BCA Sync detection/data dedemodulation unit 252 detects the BCA Sync from a PE-modulated data row, and generates the byte sync signal of the BCA data with reference to the detection result. Alternatively, a BCA ReSync detection/data demodulation unit 253 detects the BCA ReSync, and generates the byte sync signal of the BCA data with reference to the detection result.

In response to the detection of the BCA Sync, a switch 254 connects the BCA Sync detection/data demodulation unit 252 to a memory 255. Alternatively, in response to the detection of the BCA ReSync, the switch 254 connects the BCA ReSync detection/data demodulation unit 253 to the memory 255. When the BCA Sync detection/data demodulation unit 252 is connected to the memory 255 upon detection of the BCA Sync, the PE-modulated binary data is stored in a predetermined region of the memory 255 in a disc read order. When the BCA ReSync detection/data demodulation unit 253 is connected to the memory 255 upon detection of the BCA ReSync, the PE-modulated binary data is stored in a predetermined region of the memory 255 in the order opposite to the disc read order.

The data stored in the memory 255 undergoes the PE demodulation process and an error correction process, and is output to be played back. Hence, the playback results obtained when the BCA is played back from the first side (A-side) D11 and the second side (B-side) D21 can be the same. That is, target BCA data can be obtained by playing back the data from the first or second side D11 or D21.

Also, in the BCA DATA field included in the BCA, the data for the first side (A-side) D11 and the second side (B-side) D21 may be logically divided and recorded.

Next, with reference to FIG. 2, the information recording/playback apparatus to which the BCA playback circuit shown in FIG. 1 is applied will be described. This information recording/playback apparatus records the information on the optical disc D, plays back the data recorded on the optical disc D, and the like.

As shown in FIG. 2, the information recording/playback apparatus includes the optical pickup 10, a modulation circuit 21, a recording/playback control unit 22, a laser control circuit 23, a signal processing circuit 24, a demodulation circuit 25, an actuator 26, and a focus tracking control unit 30.

The optical pickup 10 also includes a laser 11, collimator lens 12, polarization beam splitter (to be referred to as a PBS hereinafter) 13, quarter wavelength plate 14, objective lens 15, focus lens 16, and photodetector 17.

The focus tracking control unit 30 also includes a focus error signal generation circuit 31, focus control circuit 32, tracking error signal generation circuit 33, and tracking control circuit 34.

The operation of recording the information on an optical disc D in this optical disc apparatus will be described below. The modulation circuit 21 modulates recorded information (data symbol) from a host in accordance with a predetermined modulation scheme into a channel bit sequence. The channel bit sequence corresponding to the recorded information is input to the recording/playback control unit 22. Also, a recording/playback instruction (in this case, recording instruction) is output from the host to this recording/playback control unit 22. The recording/playback control unit 22 outputs a control signal to the actuator 26, and drives the optical pickup such that the light beam is appropriately focused on a target recording position. The recording/playback control unit 22 also supplies the channel bit sequence to the laser control circuit 23. The laser control circuit 23 converts the channel bit sequence into a laser driving waveform, and drives the laser 11. That is, the laser control circuit 23 pulse-drives the laser 11. In accordance with this operation, the laser 11 emits the recording light beam corresponding to the desired bit sequence. The recording light beam emitted from the laser 11 becomes parallel light by the collimator lens 12, and enters and passes through the PBS 13. The beam which has passed through the PBS 13 then passes through the quarter wavelength plate 14, and focused on the information recording surface of the optical disc D by the objective lens 15. The focused recording light beam is maintained in an optimal beam spot on the recording surface by focus control performed by the focus control circuit 32 and actuator 26, and the tracking control performed by the tracking control circuit 34 and actuator 26.

The operation of playing back the data from the optical disc D in this information recording/playback apparatus will be described below. A recording/playback instruction (in this case, playback instruction) is output from the host to the recording/playback control unit 22. The recording/playback control unit 22 outputs a playback control signal to the laser control circuit 23 in accordance with the playback instruction from the host. The laser control circuit 23 drives the laser 11 based on the playback control signal. In accordance with this operation, the laser 11 emits the playback light beam (light beam having a predetermined intensity). The playback light beam emitted from the laser 11 becomes parallel light by the collimator lens 12, and enters and passes through the PBS 13. The light beam which has passed through the PBS 13 then passes through the quarter wavelength plate 14, and is focused on the information recording surface of the optical disc D by the objective lens 15. The focused playback light beam is maintained in an optimal beam spot on the recording surface by focus control performed by the focus control circuit 32 and actuator 26, and the tracking control performed by the tracking control circuit 34 and actuator 26. Note that the tracking control will be described in detail below. In this case, the playback light beam emitted on the optical disc D is reflected by the reflecting film or reflecting recording film in the information recording surface. Reflected light passes through the objective lens 15 in the opposite direction, and becomes the parallel light again. The reflected light then passes through the quarter wavelength plate 14, has vertical polarization with respect to incident light, and is reflected by the PBS 13. The beam reflected by the PBS 13 becomes convergent light by the focus lens 16, and enters the photodetector 17. The photodetector 17 has, e.g., four photodetectors. The light beam which becomes incident on the photodetector 17 is photoelectrically converted into an electrical signal and amplified. The amplified signal is equalized and binarized by the signal processing circuit 24 and sent to the demodulation circuit 25. The demodulation circuit 25 executes a demodulation operation corresponding to a predetermined modulation scheme and outputs playback data.

On the basis of part of the electrical signal output from the photodetector 17, the focus error signal generation circuit 31 generates a focus error signal. Similarly, on the basis of part of the electrical signal output from the photodetector 17, the tracking error signal generation circuit 33 generates a tracking error signal. The focus control circuit 32 controls the actuator 26 and the focus of the beam spot, on the basis of the focus error signal. The tracking control circuit 34 controls the actuator 26 and the tracking of the beam spot, on the basis of the tracking error signal.

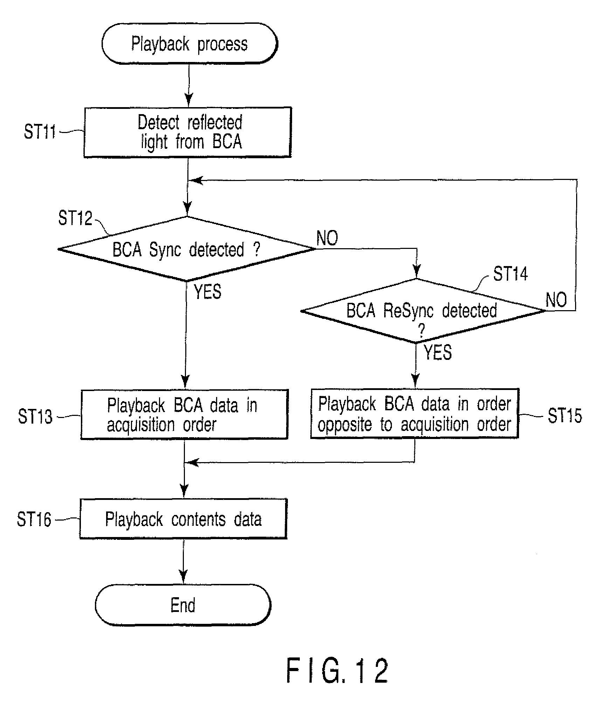

With reference to the flowchart shown in FIG. 12, the playback process of the optical disc D will be described below. First, the BCA is played back by the optical pickup 10. That is, the playback light beam is applied to the BCA, and the reflected light of this light beam is detected (ST11). Upon detection of the BCA Sync reflected in the reflected light (YES in ST12), medium unique information recorded in the BCA DATA field succeeding to the BCA Sync is played back in the first playback process (ST13). Alternatively, upon detection of the BCA ReSync reflected in the reflected light (YES in ST14), the medium unique information recorded in the BCA DATA field succeeding to the BCA ReSync is played back in the second playback process (ST15). The first playback process is a process of playing back the medium unique information in the acquisition order, and the second playback process is a process of playing back the medium unique information in the order opposite to that. After the medium unique information recorded in the BCA DATA field is played back, contents data recorded on the optical disc D is then played back (ST16).

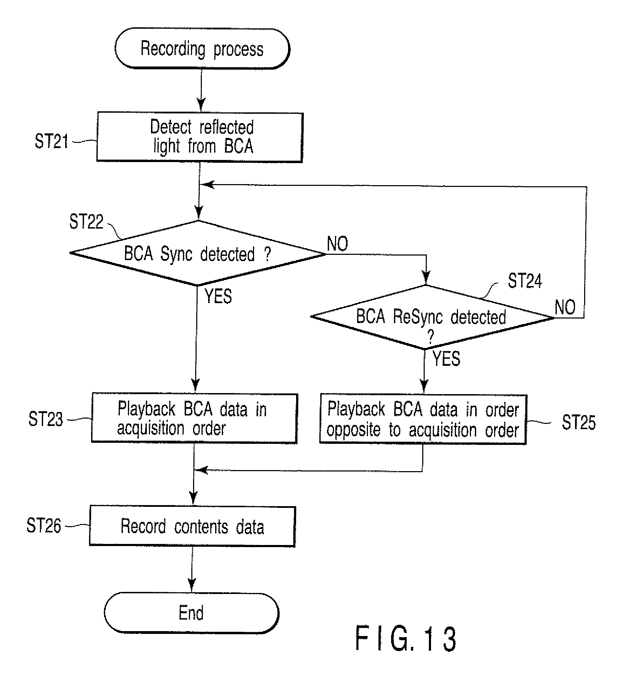

With reference to the flowchart shown in FIG. 13, the recording process of the optical disc D will be described below. First, the BCA is played back by the optical pickup 10. That is, the playback light beam is applied to the BCA, and the reflected light of this light beam is detected (ST21). Upon detection of the BCA Sync reflected in the reflected light (YES in ST22), medium unique information recorded in the BCA DATA field succeeding to the BCA Sync is played back in the first playback process (ST23). Alternatively, upon detection of the BCA ReSync reflected in the reflected light (YES in ST24), the medium unique information recorded in the BCA DATA field succeeding to the BCA ReSync is played back in the second playback process (ST25). The first playback process is a process of playing back the medium unique information in the acquisition order, and the second playback process is a process of playing back the medium unique information in the order opposite to that. After the medium unique information recorded in the BCA DATA field is played back, the contents data is recorded on the optical disc D (ST26).

As described above, the optical disc having the BCA which is read-accessible from the obverse and reverse sides of the disc and compatible with the BCA standard can be provided. Additionally, the information playback apparatus and information recording apparatus capable of playing back the BCA data from the obverse and reverse sides of the optical disc can be provided.

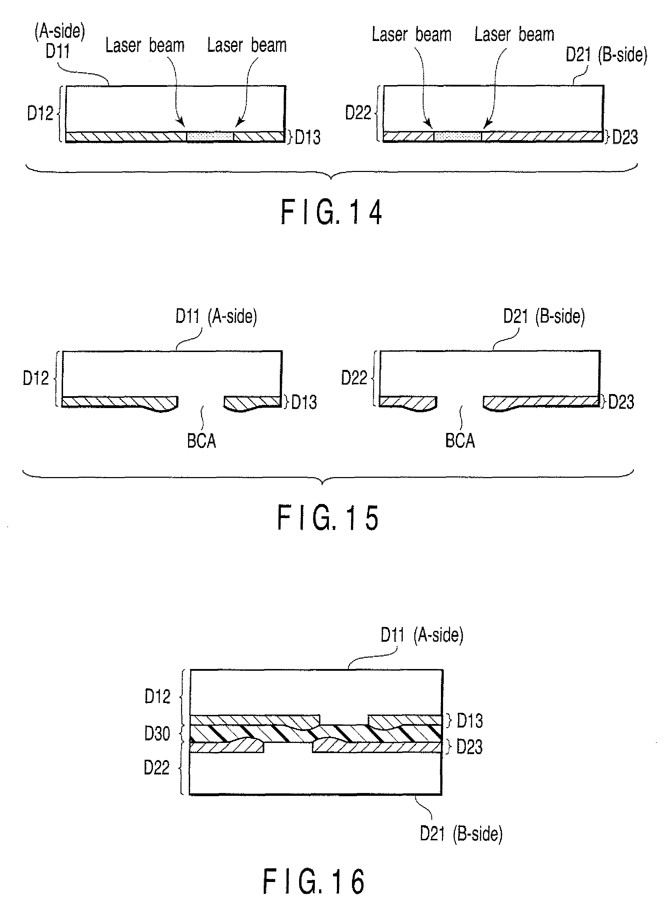

The BCA processing sequence (first example) of the optical disc D has been described above with reference to FIGS. 5 and 6. However, the present invention is not limited to this. For example, the BCA processing sequence (second example) of the optical disc D as shown in FIGS. 14 to 16 is also available.

The double-sided disc such as the DVD is implemented by laminating two media each having a thickness of 0.6 mm. FIG. 14 is a view showing the section of the disc before two media are laminated and the BCA stripe process is performed. The first information recording layer D12 includes a resin substrate and the first reflecting layer D13. Similarly, the second information recording layer D22 includes the resin substrate and the second reflecting layer D23. When a laser beam with a high intensity is applied from the first side (A-side) D11 as shown in FIG. 14, the BCA stripe can be processed as shown in FIG. 15. Similarly, when the laser beam with a high intensity is applied from the second side (B-side) D21, the BCA stripe can be processed as shown in FIG. 15. That is, individual BCA stripes can be processed.

Next, as shown in FIG. 16, the optical disc D having the first and second information recording layers D12 and D22 is produced by laminating the first and second information recording layers D12 and D22 through the adhesion layer 30 therebetween. Note that the adhesion layer 30 is made of a material through which the playback laser beam having a predetermined intensity cannot be transmitted.

Hence, when the BCA is played back from the first side (A-side) D11, signal interference from the BCA on the second information recording layer D22 side can be avoided. Similarly, when the BCA is played back from the second side (B-side) D21, signal interference from the BCA on the first information recording layer D12 side can be avoided. The optical disc is designed such that the playback signal from the BCA satisfies the condition IBL/IBH ≦ 0.8 as shown in FIG. 7. Accordingly, the BCA data for the recording sides of the double-sided disc can be recorded while being compatible with the exiting BCA standard. In this case, the BCA data on the first side (A-side) D11 and the second side (B-side) D21 need only be played back in a reading order.

As described above, the optical disc having the BCA for the obverse and reverse sides of the disc can be provided by laminating two recording sides through the nontransparent adhesion layer through which the playback laser beam is not transmitted therebetween.

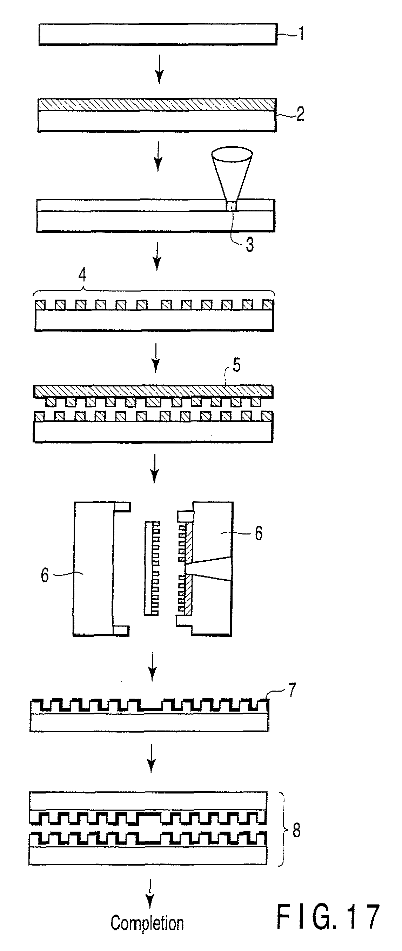

Next, the disc manufacturing method according to the present invention will be described in more detail. FIG. 17 simply shows an optical disc manufacturing sequence. On the optical disc, a stamper which has pits or grooves for storing information is first formed. In FIG. 17, a photosensitive photoresist 2 is applied to a glass plate of φ220mm6t using a spinner. The pattern of pits 3 or the like is exposed on the resist plate coated with the photoresist 2, using a master exposure device having a gas laser of, e.g., 351-nm wavelength as a light source. A pattern 4 is formed by developing the exposed pattern using an alkali developer. The master on which the pattern is formed is plated using Ni or the like, and released from the glass plate. After that, a stamper 5 on which the pattern is transferred is formed. The stamper 5 is set to an injection molding device 6, and then molding is performed. A molded substrate is formed using polycarbonate as a molding resin on the disc such as the DVD. In the molding step, various parameters are adjusted to improve the properties such as transcription of pattern, warp of substrate, birefringence, and substrate thickness. The molded substrate is coated with a film formed by a sputtering device or a dye film formed by a spinner, depending on the type of the medium. A reflecting film 7 made of Al or Ag is formed on a DVD-ROM, and a multilayered recording film is formed on a DVD-RAM. The substrate on which the film is formed is laminated on another film substrate or a dummy substrate on which the film is not formed to finish a disc 8. For the sake of convenience, in order to laminate the substrates, a method of coating the substrate with an ultraviolet setting resin by the spinner and then applying the ultraviolet to set the resin is widely used. In addition to the ultraviolet setting resin, an adhesive sheet can also laminate the substrates.

On the laminated disc, the BCA is finally formed. In the BCA, the inner periphery may be cut in the above-described master exposure step. However, in this case, all the contents of the BCA of the disc formed by the same stamper become the same. Hence, a method of applying the high-power laser beam for each disc to remove the reflecting film is used. For example, an initializing apparatus available from HITACHI Computer Peripherals which is tuned to the BCA is used. When the BCA is formed on the single-layered ROM disc using the laser beam with an infrared wavelength, the BCA can be formed under the condition that laser power = 4,000 mW, linear velocity = 5 m/s, and radial direction transfer = 6 µm/rotation.

The present invention comprises the first arrangement in which the BCA is simultaneously formed on both the sides, and the second arrangement in which both the sides are individually processed to avoid the signal interference. The substrates can be laminated in both these arrangements so that these arrangements can be properly used depending on the type and thickness of the UV resin material (or adhesive sheet) used for laminating the substrates. That is, in the first arrangement, the thickness of the laminating layer is decreased, and a material with a high laser transmissivity is used. For example, the thickness of the laminating layer is preferably set to 10 to 30 µm.

On the other hand, in the second arrangement, the thickness of the laminating layer may be increased, and a material with a low laser transmissivity may be used. In the second arrangement, although a manufacturing cost becomes a problem, both the layers can be completely separated using the adhesive sheet with the adhesive on the nontransparent substrate. When using the UV resin material, the interference between both the layers can be ignored when the thickness of the laminating layer is 50 µm or more.

Note that in the single-sided/double-layered playback disc, the signal of both the layers needs to be read from the playback laser incident surface. Hence, the thickness of the laminating layer must be defined as a predetermined thickness, and the transmissivity of the material must be as high as possible to smoothly read data in the inner layer. In order to achieve this object, the first arrangement is preferable.

## Claims

1. An information recording medium (D) which has a first side (D11) and a second side (D12), **characterized by** comprising:
a first information recording layer (D12) which includes a first reflecting layer (D13) reflecting incident light with a predetermined intensity from the first side;
a second information recording layer (D22) which includes a second reflecting layer (D23) reflecting incident light with a predetermined intensity from the second side;
an adhesion layer (D30) which adheres the first information recording layer and the second information recording layer; and
a unique information recording area (BCA) which is formed by burst-cutting the first reflecting layer and the second reflecting layer in correspondence with medium unique information, using incident light with an intensity higher than the predetermined intensity from one of the first side and the second side.

2. A medium according to claim 1, **characterized in that** a relationship between a reflectance IBH of a region which is not burst-cut in the unique information recording area and a reflectance IBL of a region which is burst-cut in the unique information recording area satisfies IBL/IBH ≦ 0.8.

3. A medium according to claim 2, **characterized in that** the adhesion layer is made of a material with a transmissivity to satisfy IBL/IBH ≦ 0.8.

4. A medium according to claim 1, **characterized in that** the unique information recording area includes
a first information area (F1) in which first information is recorded,
a second information area (F2) in which second information is recorded, and
a third information area (F3) which is an area sandwiched between the first information area and the second information area, and in which the medium unique information is recorded.

5. A medium according to claim 4, **characterized in that** the first information and the second information include information indicating a position of the third information area.

6. An information recording medium (D) which has a first side (D11) and a second side (D12), **characterized by** comprising:
a first information recording layer (D12) which includes a first reflecting layer (D13) reflecting incident light with a predetermined intensity from the first side, and a first unique information recording area (BCA) formed by burst-cutting the first reflecting layer in correspondence with medium unique information using incident light with an intensity higher than the predetermined intensity from the first side;
a second information recording layer (D22) which includes a second reflecting layer (D23) reflecting incident light with a predetermined intensity from the second side, and a second unique information recording area (BCA) formed by burst-cutting the second reflecting layer in correspondence with medium unique information using incident light with an intensity higher than the predetermined intensity from the second side; and
an adhesion layer (D30) which adheres the first information recording layer and the second information recording layer.

7. A medium according to claim 6, **characterized in that** the adhesion layer is made of a material through which the incident light is not transmitted.

8. A medium according to claim 6, **characterized in that** a relationship between a reflectance IBH of regions which are not burst-cut in the first unique information recording area and the second unique information recording area, and a reflectance IBL of regions which are burst-cut in the first unique information recording area and the second unique information recording area satisfies IBL/IBH ≦ 0.8.

9. An information playback method for playing back an information recording medium, the information recording medium having a first information recording layer which includes a first reflecting layer reflecting incident light with a predetermined intensity from the first side, a second information recording layer which includes a second reflecting layer reflecting incident light with a predetermined intensity from the second side, an adhesion layer which adheres the first information recording layer and the second information recording layer, and a unique information recording area which is formed by burst-cutting the first reflecting layer and the second reflecting layer in correspondence with medium unique information, using incident light with an intensity higher than the predetermined intensity from one of the first side and the second side, and the unique information recording area having a first information area in which first information is recorded, a second information area in which second information is recorded, and a third information area which is an area sandwiched between the first information area and the second information area, and in which first information is recorded, the information playback method **characterized by** comprising:
applying a light beam with the predetermined intensity, and detecting reflected light of the light beam (ST11); and
playing back the medium unique information succeeding to the first information in a first playback process upon detection of the first information reflected in the detected reflected light, and playing back the medium unique information succeeding to the second information in a second playback process upon detection of the second information reflected in the detected reflected light (ST12 - ST15).

10. A method according to claim 9, **characterized in that** the first playback process is a process of playing back the medium unique information in an acquisition order, and the second playback process is a process of playing back the medium unique information in an order opposite to the acquisition order.

11. An information recording method for recording information on an information recording medium, the information recording medium having a first information recording layer which includes a first reflecting layer reflecting incident light with a predetermined intensity from the first side, a second information recording layer which includes a second reflecting layer reflecting incident light with a predetermined intensity from the second side, an adhesion layer which adheres the first information recording layer and the second information recording layer, and a unique information recording area which is formed by burst-cutting the first reflecting layer and the second reflecting layer in correspondence with medium unique information, using incident light with an intensity higher than the predetermined intensity from one of the first side and the second side, and the unique information recording area having a first information area in which first information is recorded, a second information area in which second information is recorded, and a third information area which is an area sandwiched between the first information area and the second information area, and in which first information is recorded, the information recording method **characterized by** comprising:
applying a light beam with the predetermined intensity, and detecting reflected light of the light beam (ST21);
playing back the medium unique information succeeding to the first information in a first playback process upon detection of the first information reflected in the detected reflected light, and playing back the medium unique information succeeding to the second information in a second playback process upon detection of the second information reflected in the detected reflected light (ST22 - ST25); and
with reference to the playback medium unique information, applying the light beam reflecting predetermined information, and recording the predetermined information on the first information recording layer and the second information recording layer (ST26).

12. A method according to claim 11, **characterized in that** the first playback process is a process of playing back the medium unique information in an acquisition order, and the second playback process is a process of playing back the medium unique information in an order opposite to the acquisition order.
